# EUROPEAN PATENT APPLICATION

(11) **EP 1 416 410 A1**
(43) Date of publication of application: **06.05.2004**
(21) Application number: 03076837.8
(22) Date of filing: 13.06.2003
(51) Int. Cl.: G06F 17/60

(54) **Systems and methods for real-time media placement**

(30) Priority: 28.10.2002 US 282506
(71) Applicant: Galactic Media, S.A., Santiago de los Caballeros (DO)
(72) Inventor: Elias Espinal, Jose Carlo, Santiago de los Caballeros (DO)
(74) Representative: Davila Baz, Angel

(57) **Abstract**

A media reservation system and method for secure, dependable, real-time reservation of media space on a plurality of media distribution channels. The system and method include transporting media to the location from which the media will enter a media distribution channel and the placement of the media in the media distribution channel. This permits media to be placed easily from any place in the world to any other place in the world.

## Description

### Field of the Invention

This invention relates generally to publicity and advertising, and particularly to systems and methods for placing advertisements in real-time using the Internet.

### Background of the Invention

Over the years, publicity and advertising have evolved from local activities to global ones. This is evident today with companies such as Coca-Cola and McDonalds, whose advertising campaigns are increasingly implemented in a homogeneous way. This is due primarily to factors of (1) cost, since such homogeneity allows creating a single unique ad with a fixed budget, and (2) consistency, that is, the desire to provide a consistent image of the products and services for all of the world's geographical, ethnic, and cultural regions. Of course, even within a homogeneous ad campaign, slightly different versions of any one ad could be created to better address consumers in different localities.

But increasing globalization has brought with it an increased need for advertising agencies to have at least some minimal form of local representation in regions where it wishes to place advertisements. This need arises mainly from a need to know, for each country or region: (1) local markets, (2) how to interact with local bureaucracy, (3) how to deal with legal barriers, and (4) how to obtain efficiency in placement times for ads.

By itself, this need to open offices remotely located from the place where ads are created has brought with it an increase in costs for the creation, reservation, and transportation of global advertising. This increase in costs is due to (1) additional costs of maintaining a large staff abroad, (2) problems with delays and costs of sending the ads themselves, many times using unreliable physical carriers, (3) the possible partnership and sharing of benefits with foreign advertising agencies, and (4) the costs of maintaining, for logistical reasons, the whole operation synchronized, both operationally and legally.

These increased costs are due in part to ratings systems that are often locally applicable, lacking even a standardized publication method. Traditionally, the way to access local ratings was, for example, by making telephone calls or faxes or, more typically, by hiring an agency that specializes in ratings that would execute the appropriate market research to find out the ratings of a program or channel (be it television, radio, a Web site, digital video, etc.). When contracting with such an agency, that company would effectively ask all applicable advertising venues for their known ratings, compile all these ratings, and then provide this unified ratings package to interested parties. But this approach creates various problems by, for example, (1) making it difficult for the ratings provider to keep the ratings data up-to-date, (2) making it difficult to establish a global community in which ratings data may be easily shared, and (3) requiring a time-consuming process to obtain and analyze ratings data.

After analyzing ratings data, advertisers or their agents traditionally negotiate with sellers of media space. While there are some advantages to being able to meet face-to-face, this form of negotiation also has weaknesses. For example, (1) it is not always possible to be in the same time at the same place; (2) the process is inherently slow; and (3) human errors are common during the annotation of the negotiations. Although these shortcomings are somewhat alleviated by using modern technology (such as telephones, fax machines, and e-mail), flaws in the reservation process remain. For example, (1) constant human intervention in the process is required; (2) there are still numerous places in the process where human error can occur; and (3) when both the buying and selling entities are geographically distant, they depend on local time-zone compatibilities to do business. In the case of the telephone, both parties must be available at an agreed-upon time. In the case of fax machines and e-mail, each party must wait for acknowledgment from the other. This makes the process very slow as each iteration in the negotiation means waiting for the other side to acknowledge several hours or, especially if the parties are in different time zones, days later.

Even after negotiations end in a contract, advertisers must still send the ads they wish to place in a separate transaction. Typically, advertisers send ads to providers of media space via physical transportation means based on traditional mail systems (e.g., planes, trucks, FedEx, and UPS). A small fraction of advertisers send ads via the Internet using e-mail or the File Transfer Protocol (FTP). But because these transactions are distinct from the negotiations, the mail and FTP protocols normally do not (1) classify and catalog an ad transfer, (2) notify a third party of a successful transfer, and (3) verify and authenticate the ad (at least without complex, expensive and/or custom-made "plug ins").

The inability to classify and catalog the information sent or received means, for example, that when an ad arrives the system has no automated or easy way to determine the length of the ad, the channel on which it is supposed to play, the playing time, etc. This shortcoming makes human intervention necessary in order to determine such information.

The inability to notify a third party that a successful transfer has occurred means, for example, that when an ad is received, no one will be aware of receipt unless a human decides to "take a look" at the e-mail or FTP programs, or other programs are written to monitor e-mail and FTP programs (which increases complexity and the possibility of errors). Without this capability, a system that, for example, can air ads automatically will not be able to tell that an ad has arrived (much less that it needs to be aired) automatically.

The inability (without "plug-ins") to verify and authenticate the data being transferred means, for example, that there is no automated and standardized way to authenticate and verify the sent and received documents. Authentication means knowing who sent the data, while verification means knowing that the contents of the data were not modified while in transit.

What has been missing are systems and methods that allow advertisers and providers of advertising space to break away the geographical barriers, shorten the waiting times to real-time acknowledgments, stop the dependency of local time zones, and minimize human errors. The invention resolves all these logistic and engineering issues and limitations in a simple, efficient, inexpensive, and importantly ― real-time approach. The present invention facilitates the reservation, transportation, and placement of advertisements directly, in real-time, from anywhere to anywhere in the world, without needing extensive knowledge of the market to be exploited, and without having to maintain fully equipped offices in remote markets.

In accordance with the present invention, an advertiser may place an ad with, for example, a TV station in a foreign country with the same speed and efficiency as placing the ad on a local TV station. Conversely, a TV station that previously had to expend valuable resources to gain even a single advertising customer outside its locale is given access to all advertisers throughout the world with an Internet connection, and can receive ads from those customers with at least the same speed and simplicity as its local customers. Thus the present invention provides not only the advantage of making geographical and bureaucratic barriers in the process of buying, selling, transporting, and airing advertisements easier to overcome, but also advantageously creates a standardized system that dramatically improves the efficiency of the publicity field itself, both locally and remotely.

### Summary of the Invention

The present invention enables interaction between local or global producers and consumers of publicity (or software agents representing the producers and consumers) in a centralized virtual place on the Internet, and interaction with remote users and automated programs in charge or transporting and airing publicity.

A system or method according to the present invention includes providing distribution channel information for a plurality of distribution channels to a user via an Internet interface. The user has access to global ratings when selecting media space on at least one of the plurality of distribution channels via the Internet interface, reserving the selected media space, receiving media from the user, and forwarding the media to a distributor for placement in the selected media space.

The system includes a media distribution channel database for storing media space information, including reservable slots, for the media distribution channel, and a user interface through which a user has access to media space information. Through the user interface, the user selects a reservable slot on the media distribution channel. A media reservation subsystem automatically reserves the selected reservable slot for the user. And a media transportation subsystem receives media from the user and forwards the media to a distributor for placement on the media distribution channel in the media space associated with the reserved slot.

In one embodiment, the invention includes a method of reserving media space, comprising: providing distribution channel information for a plurality of distribution channels to a user through a computer network; selecting media space on at least one of the plurality of distribution channels based on data received from the user through the computer network; reserving the selected media space; receiving media from the user through the computer network; and forwarding the media to a distributor for placement in the selected media space.

In another embodiment, the invention includes a data processing system for reserving media space comprising: a database including distribution channel information for a plurality of distribution channels; and a processor coupled to the database and programmed to receive instructions for providing the distribution channel information to a user; enable the user to select media space on at least one of the plurality of distribution channels; reserve the selected media space; and receive instructions for receiving media from the user and for forwarding the media to a distributor for placement in the selected media space.

In yet another embodiment, the invention includes, in a computer system coupled to the Internet, a media reservation system for enabling the reservation of media space on a media distribution channel, comprising: a media distribution channel database storing media space information, including reservable slots, for the media distribution channel; a user interface through which a user has access to the media space information and through which the user selects a reservable slot on the media distribution channel; a media reservation subsystem that automatically reserves the selected reservable slot for the user; and a media transportation subsystem that receives media from the user and forwards the media to a distributor for placement on the media distribution channel in the media space associated with the reserved slot.

### Brief Description of the Drawings

FIGS. 1A and 1B illustrate a system and data flow according to the invention.
FIG. 2 is a flow chart of program and ad reservation on a channel according to the invention.
FIG. 3A illustrates a tree-like representation of a geographical database used in a system according to the invention.
FIG. 3B illustrates text-based traversal of a geographical database according to the invention.
FIG. 3C illustrates a geographical navigation bar according to the invention.
FIG. 3D illustrates formats for entries in a geographical database according to the invention.
FIG. 4 is a flow chart of an ad transfer according to the invention.
FIG. 5 illustrates a graphical user interface according to the invention.
FIG. 6 illustrates a context frame in a graphical user interface according to the invention.

### Detailed Description of the Invention

In a preferred embodiment, the invention can be implemented as a main system ― a global ad reservation system ― and three subsystems: a global ratings system, an ad transfer system, and a one-click ad reservation system. A newly developed system according to the invention is the ADINTEGRATOR (a trademark of Galactic Media, Inc.).

A global ad reservation system according to the present invention allows media space consumers (such as advertisers) and media space sellers (such as media distribution channels) to buy and sell media space globally. Preferably, every user of the global ad reservation system is a member of a system community (e.g., the ADINTEGRATOR community). Becoming a member preferably entails entering into a contract with the system provider. The contract preferably requires the member to promise to follow the rules and standards imposed by the system provider. Examples of contract terms are the member's agreement to: (1) pay for using the system; (2) pay for placing publicity with the system; (3) accept penalties for any improper use of the system; (4) provide reliable and accurate information to the system; and (5) refrain from falsifying critical data such as program ratings and the popularity of channels and programs.

The user can be a producer or a consumer, or both, of publicity, or may be an agent or a party with some other interest in media distribution. When the user becomes a member, the user can use the global ad reservation system to browse the stations, channels, and programming for unreserved media slots. Access regardless of whether the media slot is for a local or a global distribution channel is transparent and simple. A global ad reservation system according to the invention eliminates geographic barriers to such an extent that media may be placed on distribution channels anywhere in the world with about the same speed and efficiency as they are placed locally. In this way, the system gathers global producers and consumers of publicity in a virtual centralized location via the Internet. Users preferably have access to ratings and other information that is valuable in deciding into which distribution channels media may be placed economically. A global ad reservation system according to the invention also establishes a standardized system that dramatically improves the efficiency of the publicity field itself, both locally and non-locally.

Using a global ad reservation system according to the invention, the producers and owners of stations, channels, and programs can publish in real-time available media space, including advertising slots and programming slots. These slots may be reserved in real-time via a single user action such as a mouse click. The member reserving the space lets the system know what specific media to place in the reserved space. This triggers an action allowing the system to transparently transport the specific media from the member to the medium in which it will be distributed. The system also makes it possible to trigger an action to automatically distribute media once it arrives at its distribution channel destination. For illustrative purposes, the member reserving media space is usually referred to herein as an advertiser, though the member could instead reserve programming, rather than advertising, slots.

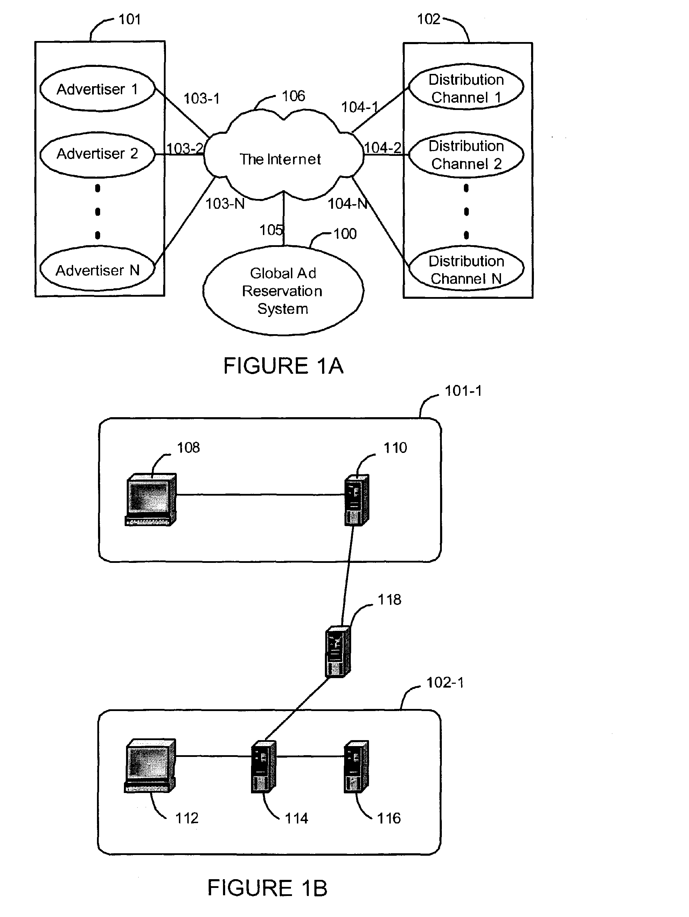

Figure 1A illustrates an overview of an embodiment of the present invention specifically directed to advertising media. Figure 1A shows a global ad reservation system 100, advertisers 101, distribution channels 102, and the Internet 106. Each advertiser 101 is coupled to the Internet via a connection 103-1 through 103-N. Each distribution channel 102 is coupled to the Internet 106 via a connection 104-1 through 104-N. The global ad reservation system 100 is coupled to the Internet 106 via a connection 105. In this way, the advertisers 101 and distribution channels 102 may communicate with the global ad reservation system 100. Each distribution channel 102 is for a printed medium (such as a magazine, newspaper, direct-mail vendor, outdoor-ad vendor, transit-ad vendor, or Internet-ad vendor), a broadcast medium (such as television, radio, or the Internet), or some other medium (including, but not limited to, Digital Cinema, Cable TV, and Satellite TV/Radio).

Figure 1 B illustrates an advertiser 101-1 and a distribution channel 102-1 in more detail. Figure 1 B shows an advertiser computer 108, a media mover client 110, a distribution channel computer 112, a media mover server 114, an optional digital ad insertion system 116, and a global ad reservation system servlet 118. The advertiser 101-1 is an entity (e.g., a person, a company, or a software agent) that has an advertisement to place in a distribution channel.

The optional digital ad insertion system 116 preferably follows a set of protocols defined by the system, which provide the digital ad insertion system 116 with all the information required to play the ad automatically. Examples of this information are a name for the ad, location within a networked file system, the type of ad, its duration, and the program and channel where the ad is playing at. The same protocols preferably also specify a way for a digital ad insertion system 116 to notify the media mover server 114 that an ad could not be played or was canceled, so that the media mover server 114 can inform the global ad reservation system 100 about such an event.

The advertiser computer 108 may be at the advertiser's facilities, in the field, or at some other location with an Internet connection. A user of the advertiser computer 108 can communicate with the global ad reservation system 100 or the media mover client 110, preferably via a Web browser, over an optionally encrypted communications channel. The media mover client 110 is preferably a computer with a program that resides at the advertiser's facilities (e.g., an advertising agency). In an alternate embodiment, the media mover client 110 is a program stored in the advertiser computer 108.

The primary purpose of the media mover client 110 is to transfer ads to media mover servers, such as media mover server 114. These ads may contain audio, video, text, speech, animations, executable objects, or data, or any combination of those. The contents of ads typically vary depending upon the medium to which they are directed. In addition, the media mover client 110 is preferably not limited to the transferring of ads to the media mover server 114, but can also transfer the actual programming where the ads are placed.

The distribution channel computer 112 may be located at the distribution channel facilities or at some other location with an Internet connection. A user of the distribution channel computer 112 can communicate with the global ad reservation system 100 or the media mover server 114, preferably via a Web browser, over an optionally encrypted communications channel. The media mover server 114 is preferably a computer with a program that resides at the location where ads will be aired (e.g., a TV channel). In an alternate embodiments, the media mover server 114 is a program stored in the distribution channel computer 112, or the optional digital ad insertion system 116.

The primary purpose of the Media Mover Server 114 is to receive ads from media mover clients, such as media mover client 110. The media mover server 114 is optionally configured to communicate with the digital ad insertion system 116, which enables automated airing of the ads.

The reservation system servlet 118 is typically located at the global ad reservation system 100 and serves as an intermediary between the media mover client 110 and the Media Mover Server 114. The reservation system servlet 118 also communicates with the advertiser computer 108 and distribution channel computer 112, as well as with peripheral systems (not shown) that reserve, transport, or distribute media. The reservation system servlet 118 preferably generates dynamic Web pages so as to provide a graphical user interface and manages users in a scalable, secure, efficient, and reliable way.

Parameters for the media mover client and media mover server are preferably set by a Web service. The Web service is software that may be located at the reservation system servlet 118 or at some other location. The Web service allows remote or local software programs to access the functionality of global ad reservation system 100 with little or no human intervention. Web services are usually composed of extensible Markup Language (XML), Simple Object Access Protocol (SOAP), Hyper Text Transfer Protocol (HTTP), and Web Services Description Language (WSDL). The parameters include names, access passwords (used to access global ad reservation system 100 automatically and used as a "Secret Key" facilitating encrypted data transfer).

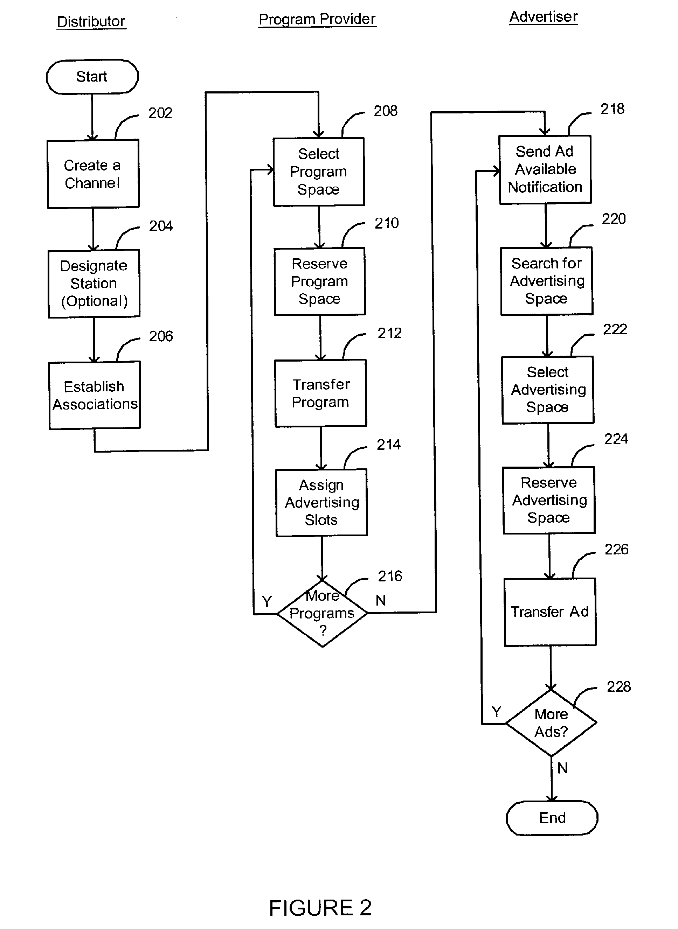

Figure 2 shows a preferred method of making available and reserving media space for a channel. As shown in Figure 2, the distributor initially creates (202) a channel. The channel preferably represents a distribution channel for a specific medium (e.g., TV, radio, or the Internet). Optionally, the distributor designates (204) a station with which the channel is associated (e.g., a cable station or group of managed radio channels). Then the distributor establishes (206) associations with the channel/station (e.g., designating a geographical location with which the channel is associated).

Once a channel is created and its associations are established, a program provider may search for and select (208) program space on the channel. The program provider can preferably identify program space by, for example, a desired geographic location that is associated with a channel having available media space. The program provider reserves (210) desired program space and transfers (212) the program for broadcast or publication. The program provider also assigns (214) advertising slots at selected points in the program (e.g., five three-minute breaks during an hour-long news program). In an alternative embodiment, the advertising slots could be pre-assigned (i.e., assigned prior to program transfer). In that case the program provider provides content for additional program space, if (216) media space for multiple programs is to be reserved prior to making the advertising slots available to advertisers. In another alternative embodiment, step 216 could be bypassed, making the advertising slots available to advertisers as soon as the slots are assigned.

After the program provider assigns the advertising slots, an advertiser preferably sends (218) notification to the global ad reservation system that an ad is available, including the name, version, and duration of the ad. The advertiser may search for (220) and select (222) advertising space. The system enables advertisers to search by channel/station, program title, the geographic region associated with the channel/station, or by some other search criteria. When open advertising slots are identified, the advertiser reserves (224) the advertising space. The reservation of ads is automatic and transactionally correct (e.g., honoring time/cost limits imposed by the available breaks, avoiding time conflicts, properly charging the right parties for the usage of the system, etc.) Then, the advertiser transfers (226) the ad. Preferably, ads are delivered without any degradation in quality. If (228) the advertiser has additional ads or wishes to reserve multiple advertising slots for the same ad, the advertiser may select additional advertising space. Otherwise the transaction ends for the advertiser (who may, of course, initiate another transaction later).

Figure 2 depicts the procedure for a first advertiser to place an ad on the program of the first program provider that places programming on a newly created channel. For subsequent program providers, the procedure essentially starts at step 210. For subsequent advertisers, the procedure essentially starts at step 220.

The entities publishing their breaks or spaces for programming are usually the entities responsible for running channels, TV or radio programs, printed media, Web sites, etc, and who wish to make media spaces available for sale. A media executive would normally: (1) create and make available the programs and/or channels under his or her control; (2) associate these programs to channels, and these channels to possible stations; (3) associate these channels or stations to one or more geographical regions; and (4) assign breaks to these programs or channels, which are available over the Internet immediately and in real-time. Thus, a single entity is likely to be both the distributor and program provider.

Although the system preferably provides a way for program administrators to specify the types of media supported (e.g.: MPEG-2, Quicktime, and Sorenson CODEC for video, or mp3 for radio), the system also preferably provides a facility for program administrators to specify a URL (i.e., an Internet address link) that allows advertisers to download a sample media file, which they can test locally to make sure that the ads they generate are compatible with the remote playing mechanisms.

To facilitate the interaction between the administrators of stations, channels, and ads, small icons with the shape of an envelope are preferably placed all throughout the GUI in all places where information about stations, channels, or ads is displayed. Clicking on this envelope icon automatically takes the user to a messaging system where they can compose a message for the administrator of the station, channel, or ad they were just looking at without having to know or remember the recipient's user-wide ID.

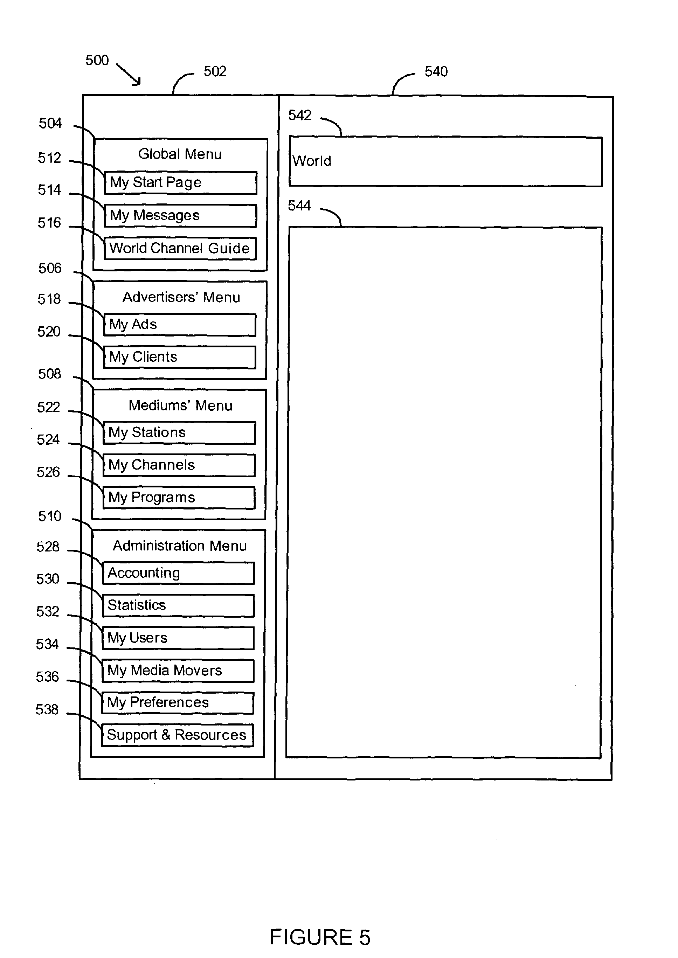

Users of the system preferably have access through a graphical user interface (GUI). An exemplary GUI is illustrated in Figure 5. The GUI 500 includes a menu frame 502 and a context frame 540. The menu frame 502 comprises four menus: a global menu 504, advertisers' menu 506, mediums' menu 508, and an administration menu 510. The context frame 540 includes a hierarchical menu navigator 542 and a display frame 544 for displaying information dependent upon a specific menu selection or function. The global menu 504 includes three buttons: my start page 512, my messages 514, and world channel guide 516. The advertisers' menu 506 includes two buttons: my ads 518 and my clients 520. The mediums' menu 508 includes three buttons: my stations 522, my channels 524, and my programs 526. The administration menu 510 includes six buttons: accounting 528, statistics 530, my users 532, my media movers 534, my preferences 536, and my support & resources 538.

Financial details are preferably handled entirely by the system. Pressing the accounting button 528 gives access to information related to payments, penalties for canceling reserved media space, commissions, charges, and discounts.

Statistical data, including ratings, is preferably accessible by pressing the statistics button 530. The statistics are particularly valuable to consumers of media space who are interested in identifying markets for media, such as ads. To this end, available statistics may include those related to the geographic location of a channel, the cost of using the channel, channel content (e.g., a news channel or a comedy channel), program content, or the popularity of the medium, channel or program. All of these statistics are preferably available in real-time.

Ratings are preferably organized based on geographical location, market segment, station, channel, and program-on-a-channel combination. Ratings are published in both a local standard and a global standard defined by the system. Accordingly, if a user does not understand a remote rating system, the user can look at the global rating system and get an idea of the overall rating for the program.

Ratings publishers are usually also responsible for running channels, TV or radio programs, printed media, Web sites, etc, and who wish to let the world know how popular their distribution channels are; of course there could be other reasons to publish ratings as well. Typically, a media executive would publish the ratings for a program by making the program available on a channel that is associated with a geographical region and assigning ratings to the program. Ratings data may be accumulated in a manner that is standard in the ratings industry. Alternatively, the ratings data could be provided by a third party that specializes in providing ratings data.

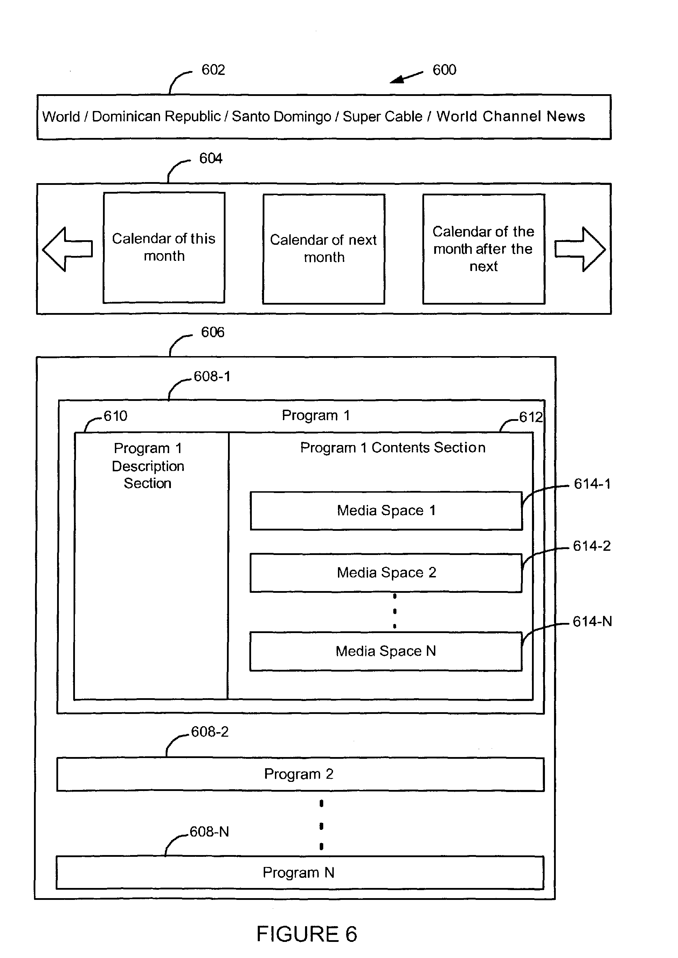

An example of the content of the context frame 540 is illustrated in Figure 6 as context frame 600. The context frame includes the hierarchical menu navigator 602 with the indicator "World / Dominican Republic / Santo Domingo / Super Cable / World Channel News". This indicates that the current channel is the World Channel News of the Super Cable station in Santo Domingo. Also illustrated is a calendar bar 604, which comprises three calendar views and arrow buttons that, when pressed, result in a different set of three calendars being displayed. If a day is selected on one of the calendars, the channel programming frame 606 contains information about programs 1-N displayed in the program block sections 608-1 through 608-N. One of the programs, for example program 1, may have expanded information, such as illustrated in program block 608-1. The expanded information preferably includes a program description section 610 and a program contents section 612. The program contents section 612 is comprised of media spaces 1-N displayed in media space blocks 614-1 through 614-N. The media space blocks may represent advertisement slots that are used or available (though to protect advertisers' privacy, no details are provided if the advertisement slot is used by another). The media space blocks may also represent unused media space.

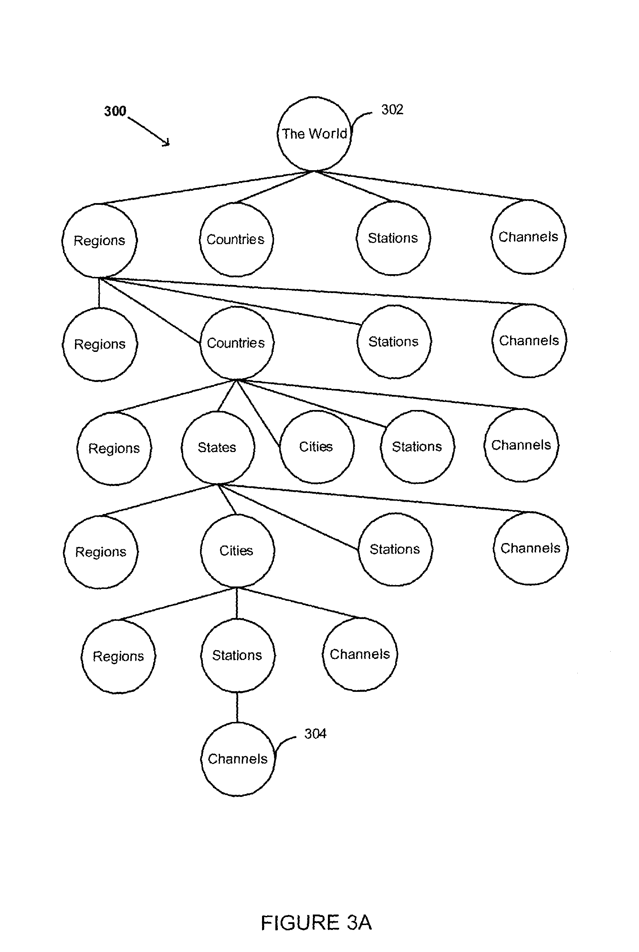

Figure 3A illustrates an example of geographic location relationships that are used, for example, when establishing associations (Figure 2, 206) so as to facilitate a search (Figure 2, 220). As shown in Figure 3A, the relationships may be illustrated as a tree 300 where "the world" is the root node 302. In this example, the children of the root node 302 are regions, countries, stations, and channels. Regions have child nodes that may be of the type regions, countries, stations, or channels. Countries have child nodes that may be of the type regions, states, cities, stations, or channels. States have child nodes that may be of the type regions, cities, stations, or channels. Cities have child nodes that may be of the type regions, stations, or channels. Stations may have child nodes of the type channels. Channels are typically the leaves of tree 300. For example, when a user accesses leaf node 304, the user has reached the specific channels that may be selected to, for example, reserve media space. No further subdivision by location is generally desirable. Of course, a channel may be further subdivided by day, programming space, media space, etc.

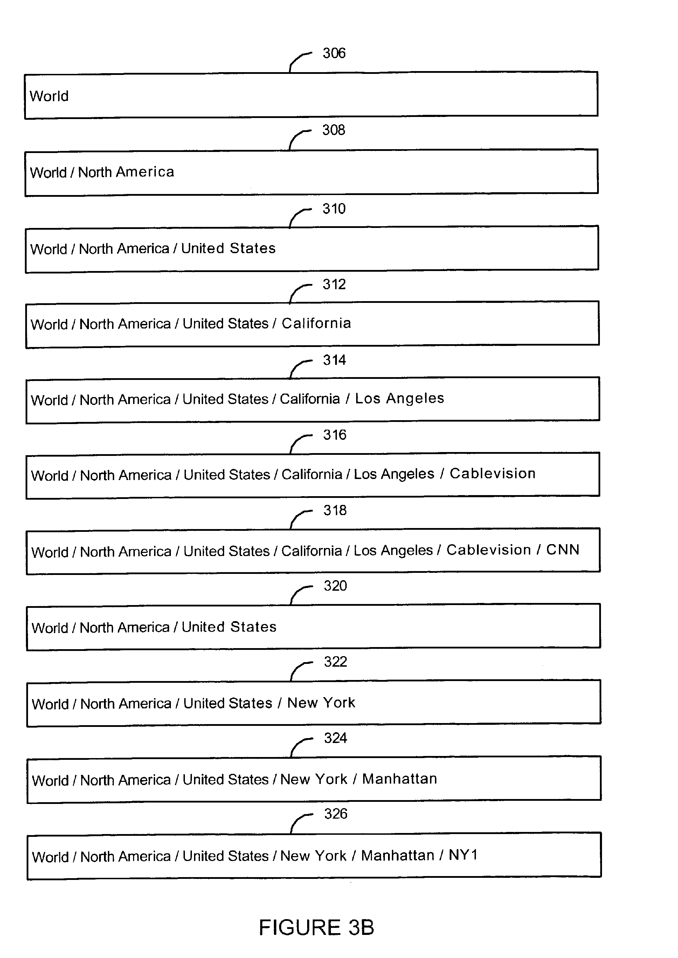

Figure 3B illustrates a hierarchical geographical navigation system indicator that is based upon the tree 300. As is apparent from Figure 3B, each node of the tree illustrated in Figure 3A has a unique indicator. For example, a user begins (306) at the root node, represented by the indicator "World". If the user selects (308) the region North America, the indicator is "World/North America". If the user then in succession selects (310, 312, 314, 316, 318) the country United States, state California, city Los Angeles, station Cablevision, and channel CNN, the respective indicators are "World/North America/United States/California," "World/North America/United States/California/Los Angeles," "World/North America/United States/California/Los Angeles/Cablevision," and "World/North America/United States/California/Los Angeles/Cablevision/CNN." Preferably, the user can also backtrack by selecting (320) the country United States, which has the indicator "World/North America/United States," then in succession select (322, 324, 326) for an alternate hierarchical path.

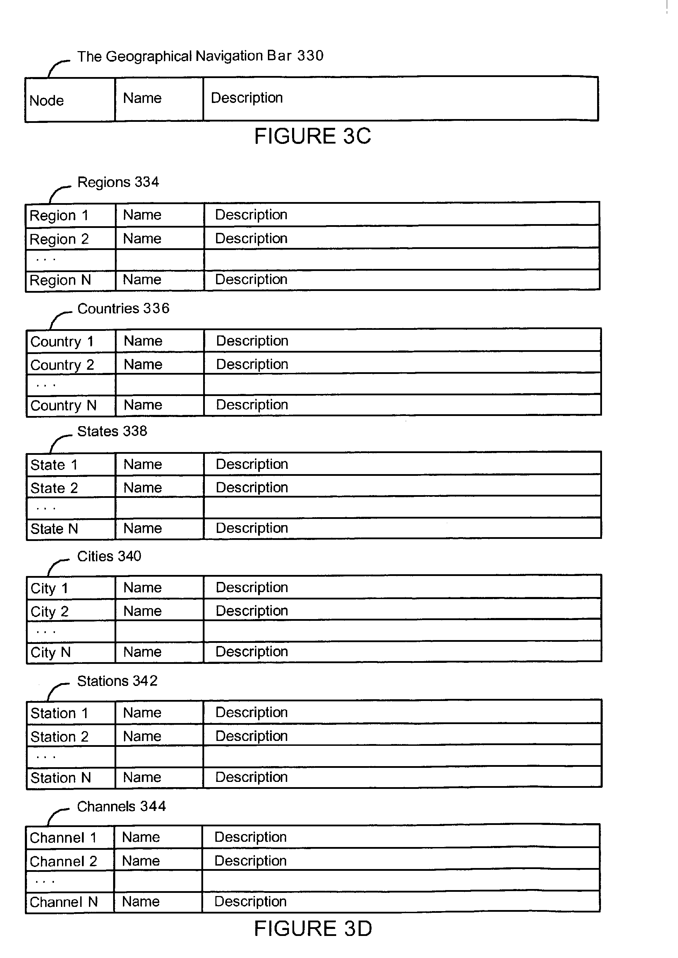

Figure 3C shows exemplary hierarchical geographical navigation contents. The Geographical Navigation Bar 330 typically contains the name and description of a channel/location in the geographical hierarchy, starting with the root node. It should be noted that not all nodes have an associated description. In one embodiment, for example, the root node does not have an associated description. During navigation, names and descriptions will generally be updated in the Geographical Navigation Bar 330. The names and descriptions are stored in a plurality of databases, such as the Regions 334, Countries 336, States 338, Cities 340, Stations 342, and Channels 344 databases represented in Figure 3D. In an alternative embodiment, the databases may be combined into a single database in which entries have a sort field indicative of whether the entry is a region, country, etc. Note that the databases represented in Figure 3D are shown in simplified form, since a database typically will contain other information, (e.g., the number of subscribers to a cable station, the owner of a TV channel, transmission standards used, etc). Also note that Figure 3D maps directly to the information that the user sees while navigating using the geographical navigation bar 330.

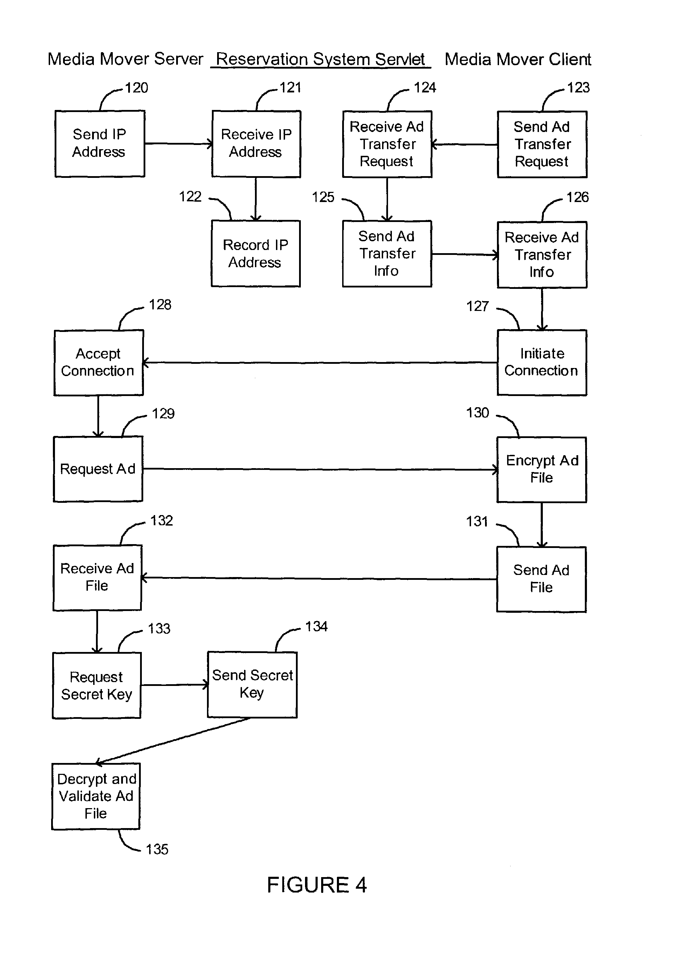

Figure 4 illustrates an exemplary embodiment of the process of sending an ad from a media mover client, such as media mover client 110 (Figure 1 B) to a media mover server, such as the media mover server 114 (Figure 1 B) via a reservation system servlet, such as reservation system servlet 118 (Figure 1 B). In this embodiment, the media mover server 114 sends (120) its IP address to the reservation system servlet 118. When the reservation system servlet 118 receives (121) the IP address, it records (122) the IP address as transfer information. In a preferred embodiment, the media mover server 114 has a dynamic IP address so it sends (120) each time it comes on line with a new IP address. In an alternative embodiment, the media mover server 114 has a static IP address so it need not send (120) each time it comes on line. But dynamic IP addresses are preferred because they reduce connectivity costs (since no fixed IP lines are needed) and allow Internet nodes to freely move around physical geographical areas while still exchanging information.

When an advertiser has an available ad, the advertiser instructs the media mover client 110 to send (123) an ad transfer request toward the media mover server 114. The reservation system servlet 118, which serves as an intermediary between the client and server, receives (124) the ad transfer request and responds by sending (125) ad transfer information. The information includes the IP address that was sent by the media mover server 114, a list of ads awaiting transmission from the media mover client 110, and a secret key for each ad. The secret key is a pseudo-randomly generated string of characters used to encrypt a message; it is essentially a one-time security token that maps to a single ad transfer. The communication between the reservation system servlet 118 and media mover client 110 is preferably via dynamic Web pages, an automated tool, a third-party tool, or some other input means (e.g., voice dictation). When the media mover client 110 receives (126) the transfer information, it attempts to initiate (127) a connection with the media mover server 114. If the IP address received with the ad transfer information is not current, the media mover client 110 will probably fail to initiate a connection. In that case, the media mover client 110 may request a current IP address from the rervation system servlet 118.

Once the IP address is updated, the media mover server 114 should accept (128) a valid connection request. The media mover server 114 then requests (129) an ad. In response to the request for an ad, the media mover client encrypts (130) and sends (131) an ad file. The media mover client preferably sends a message digest with the ad file. The actual time when the message digest is sent may be different in different embodiments, but could be sent at any time before or after the connection is initiated. The message digest is derived from a computation that produces a fixed-length (e.g., 16-byte) number that is preferably unique to a file, in this case the file including the ad to be transferred. If the file is corrupted or modified, the fixed-length number derived from the computation will preferably be different from that of the original file.

The media mover server 114 receives (132) the ad file. In one embodiment, the encryption/decryption entails the media mover client 110 and media mover server 114 working together to make sure that they communicate over an encrypted channel using the secret key received from the reservation system servlet 118. To this end, the media mover client 110 encrypts the communication channel between it and the media mover server 114 using the secret key. Then, the media mover server 114 asks (133) the reservation system servlet 118 what the pseudo-randomly generated secret key is for the current ad transfer, so that it can authenticate the data being sent to it by the media mover client 110. The reservation system servlet 118 sends (134) the secret key for the appropriate ad transfer. The media mover server 114 then decrypts (135) the ad file with the secret key. It should be noted that steps 132 and 133 could occur before, during, or even after the ad file is received by the media mover server 114. It should also be noted that the actual transfer process may be independent of security protocols; so protocols such as the Secure Sockets Layer (SSL) protocol, Transport Layer Security (TLS) protocol, or some other protocol could be implemented.

Preferably, the system is capable of transferring an ad file even in the event of broken connections or network errors. If the media mover server's 114 IP address changes while the file is being transferred, the media mover server 114 preferably informs the reservation system 118, which the media mover client 110 may query for the new IP address, and the transfer resumes where it left off. Upon receipt of the ad file, the media mover server 114 validates (135) by calculating a message digest and comparing it to the message digest that was previously received from the media mover client 110. If the message digests are the same, the file is likely to have been transferred properly. Otherwise, there may have been problems with the transfer. For example, the file may be corrupted. It should be noted that the file including the ad also includes metadata about the ad, such as who sent the ad, the name and version of the ad, the duration of the ad, the channel on which the ad is to be distributed, etc. The metadata can be passed on or used, for example, to control a system that performs automated digital ad insertions into a distribution channel.

Once a valid transfer has been made, the media mover server 114 preferably sends notification to the reservation system servlet 118 and the media mover client 110, allowing them to notify the appropriate users of the successful transfer of the ad. Optionally, the media mover server 114 communicates with a local automated ad insertion system, telling the system to broadcast the ad on a specified channel, at a specified date and time, and for a given period. With the automated ad insertion system, the whole process from the reservation of an ad space to the distribution of the ad is fully automated.

While the foregoing description and drawings represent the preferred embodiment of the present invention, it will be understood that various additions, modifications and substitutions may be made therein without departing from the spirit and scope of the present invention as defined in the accompanying claims. In particular, it will be clear to those skilled in the art that the present invention may be embodied in other specific forms, structures, arrangements, proportions and with other elements, materials, and components without departing from the spirit or essential characteristics thereof. The presently disclosed embodiments are therefore to be considered in all respects as illustrative and not restrictive, the scope of the invention being indicated by the appended claims, and not limited to the foregoing description. Furthermore, it should be noted that the order in which the process is performed may vary without substantially altering the outcome of the process.

## Claims

1. A method of reserving media space, comprising:
providing distribution channel information for a plurality of distribution channels to a user through a computer network;
selecting media space on at least one of the plurality of distribution channels based on data received from the user through the computer network;
reserving the selected media space;
receiving media from the user through the computer network; and
forwarding the media to a distributor for placement in the selected media space.

2. The method of claim 1, where the user is an advertiser and the media space is advertising space.

3. The method of claim 1, where the user is a producer and the media space is programming space.

4. The method of claim 1, where the user is a publicity agent.

5. The method of claim 1, further comprising:
prior to providing distribution channel information, requiring that the user subscribe.

6. The method of claim 1, further comprising:
accepting distribution channel information for a distribution channel of the plurality of distribution channels from a distribution channel representative.

7. The method of claim 6, further comprising:
prior to accepting distribution channel information, requiring that the distribution channel representative subscribe.

8. The method of claim 6, where the user is the distribution channel representative.

9. The method of claim 1, further comprising:
organizing the plurality of distribution channels by geographical zone; and
enabling the user to navigate, through the computer network, media space of a distribution channel located within one or more geographical zones.

10. The method of claim 1, further comprising:
organizing the plurality of distribution channels by station; and
enabling the user to navigate media space of a distribution channel located on one or more stations.

11. The method of claim 1, further comprising:
organizing the plurality of distribution channels by distribution channel type; and
enabling the user to navigate media space of a distribution channel of one or more distribution channel types.

12. The method of claim 1, where the user selects media space with a single user action.

13. The method of claim 1, where the forwarding is to a dynamic Internet Protocol (IP) address.

14. The method of claim 1, further comprising:
authenticating the media; and
verifying the media.

15. The method of claim 1, further comprising:
allowing a first global entity to automatically publish ratings in accordance with a standard;
automatically organizing the ratings by a sort field selected from the group consisting of geographical region , station, and/or channel; and
providing the ratings to the user through the computer network.

16. A data processing system for reserving media space comprising:
a database including distribution channel information for a plurality of distribution channels; and
a processor coupled to the database and programmed to
receive instructions for providing the distribution channel information to a user;
enable the user to select media space on at least one of the plurality of distribution channels;
reserve the selected media space; and
receive instructions for receiving media from the user and for forwarding the media to a distributor for placement in the selected media space.

17. The data processing computer program product of claim 16, wherein the processor is further programmed to:
receive instructions from a ratings publisher to automatically publish ratings in accordance with a standard;
automatically organize the ratings by a sort field selected from the group consisting of geographical region and station; and
provide the ratings to the user.

18. In a computer system coupled to the Internet, a media reservation system for enabling the reservation of media space on a media distribution channel, comprising:
a media distribution channel database storing media space information, including reservable slots, for the media distribution channel;
a user interface through which a user has access to the media space information and through which the user selects a reservable slot on the media distribution channel;
a media reservation subsystem that automatically reserves the selected reservable slot for the user; and
a media transportation subsystem that receives media from the user and forwards the media to a distributor for placement on the media distribution channel in the media space associated with the reserved slot.

19. The system of claim 18, further comprising:
a global ratings subsystem, including:
a global ratings database with entries that have a sort field selected from the group consisting of geographical region and station; and
a ratings receiver that accepts ratings related to the media distribution channel from a ratings publisher and stores the ratings in the global ratings database,
wherein the user has access to the global ratings database through the user interface.
